Europäisches Patentamt

European Patent Office

Office européen des brevets

(11) Publication number: **0 105 756**
**B1**

# EUROPEAN PATENT SPECIFICATION

(45) Date of publication of patent specification: **06.12.89**

(51) Int. Cl.⁴: **G 01 G 19/32, G 01 G 13/29**

(21) Application number: **83305973.6**

(22) Date of filing: **30.09.83**

(54) Combinatorial weighing apparatus and method.

(30) Priority: **01.10.82 JP 149852/82**

(43) Date of publication of application:
**18.04.84 Bulletin 84/16**

(45) Publication of the grant of the patent:
**06.12.89 Bulletin 89/49**

(84) Designated Contracting States:
**DE FR GB IT**

(56) References cited:
**FR-A-2 399 012**
**GB-A-2 085 172**
**US-A-4 130 171**
**US-A-4 281 729**

(73) Proprietor: **KABUSHIKI KAISHA ISHIDA KOKI SEISAKUSHO**
**44, Shogoin Sannou-cho Sakyo-ku Kyoto-shi Kyoto 606 (JP)**

(72) Inventor: **Kataoka, Koichi**
**343-2, Kitanakakouji Rittou-cho Kurita-gun Shiga (JP)**

(74) Representative: **Fane, Christopher Robin King et al**
**HASELTINE LAKE & CO. Hazlitt House 28 Southampton Buildings Chancery Lane London, WC2A 1AT (GB)**

EP 0 105 756 B1

Courier Press, Leamington Spa, England.

## Description

This invention relates to combinatorial weighing, of the kind wherein articles to be weighed are supplied to a line of weighing hoppers, carried by respective weighing machines for providing respective weight values for the individual quantities in the hoppers, and wherein the said weight values are employed to compute different combinations of the said quantities and one of those combinations is selected and the respective hoppers holding the selected quantities are caused to discharge their contents to a collection device to form a desired output batch.

A combinatorial weighing apparatus is generally designed to dispense batches of articles, each batch having substantially a preset weight or number of the articles. The apparatus, which includes a plurality of weighing machines, operates by weighing out small quantities of the articles using the weighing machines, each quantity normally having a slightly different weight value from the others, combining these weight values into a multiplicity of different combinations, or converting each weight value into the number of articles giving said weight value and then combining these article numbers into a multiplicity of combinations, adding the weight values or article numbers in each combination to obtain the corresponding total values, selecting the combination giving a total value substantially equal to this preset weight or number, discharging the articles from the weighing machines of the selected combination, and collecting these discharged articles together into a single output batch as desired. Such a weighing apparatus can enable highly accurate weighing operations to be carried out.

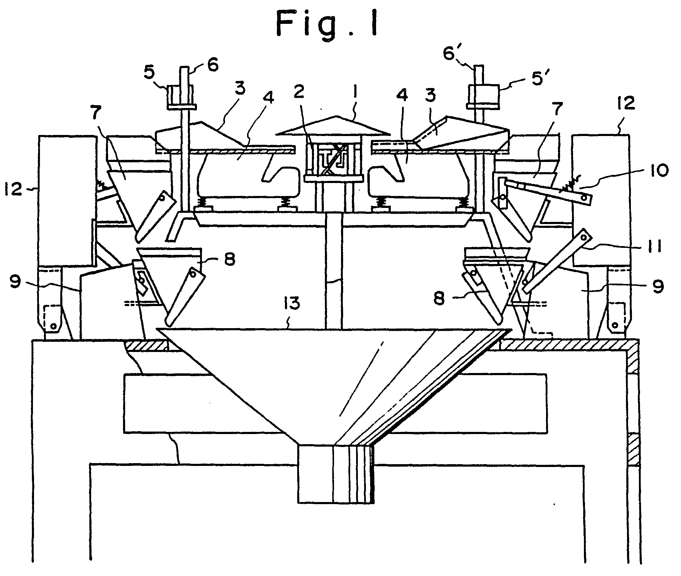

The construction of an automatic combinatorial weighing apparatus for performing such weighing is illustrated in Fig. 1 of the accompanying drawings. The apparatus includes a dispersing table 1 supported on an electromagnetic vibrating device 2 so as to be subjected to helical reciprocatory vibration, a plurality of supply troughs 3 extending radially from the dispersing table 1, a plurality of electromagnetic vibrating devices 4 for vibrating corresponding ones of the supply troughs 3, a light-emitting device 5 supported on a post 6, and a light-receiving device 5' supported on a post 6', these devices serving to detect optically the quantity of articles accumulated on the dispersing table 1.

The apparatus further includes a plurality of pool hoppers 7, each of which is situated below the distal end of a corresponding one of the supply troughs 3, a plurality of weighing hoppers 8 provided below corresponding ones of the pool hoppers 7 and arranged in a line extending above the rim of a collecting chute 13, and a plurality of weighing machines 9, each supporting one of the weighing hoppers 8. Each pool hopper 7 is provided with a lever mechanism 10 for opening and closing the pool hopper, and each weighing hopper 8 is provided with a lever mechanism 11 for opening and closing the hopper. A drive mechanism 12 is provided for each pair of the hoppers 7, 8. The combinatorial weighing apparatus has a collecting chute 13 for collecting articles discharged from the weighing hoppers 8.

The automatic combinatorial weighing apparatus thus constructed operates as follows.

The articles are supplied automatically from the distributing table 1 through the supply troughs 3 into pool hoppers 7 and thence into the corresponding weighing hoppers 8. The articles thus received in the weighing hoppers 8 are weighed by the weighing machines 9 associated therewith. Based on the weights measured by the weighing machines 9, a control unit, not shown, combines the weight values into an arbitary or predetermined number of combinations, computes the sum of the weight values in each combination, compares each sum with a preset weight, and selects the combination that gives a sum total weight equal to the target weight. The control unit then operates to open the weighing hoppers 8 which correspond to the selected combination, by the operation of the lever mechanisms 11 so that the articles are released into the collecting chute 13 from the weighing hoppers 8 to be collected together into a batch and discharged into a packaging machine or a bucket conveyor, not shown. This will leave the selected weighing hoppers 8 empty. Articles are then newly delivered from the corresponding pool hoppers 7, supplied with the articles in advance, into the empty weighing hoppers 8 by actuating the lever mechanisms 10, leaving these pool hoppers 7 empty, whereupon a new supply of articles is delivered from the dispersing table 1 and the corresponding supply troughs 3 by actuating the associated vibrating devices. The automatic combinatorial weighing operation can be continued in this manner by repeating the foregoing steps.

Thus, the articles are supplied to the weighing hoppers through the pool hoppers after accumulating temporarily on the dispersing table and in the supply troughs. Since the weighing machines are situated remote from the dispersing table, the articles dispensed by the dispersing table inevitably travel a long distance to reach the weighing hoppers. In consequence, articles such as chocolates or biscuits tend to be damaged by striking one another while in transit from the dispersing table to the weighing hoppers, resulting in a product of reduced commercial value. Moreover, viscous articles such as meats, pickles, fish and vegetables, as well as articles that are large in size and irregular in shape, have a greater opportunity of attaching themselves to the surface of the equipment when the path traversed is long. Obviously, articles that remain in the path of transit will not reach the weighing hoppers and, if such articles are large in size, eventual blockage of the path may result.

To prevent soft and delicate articles from being damaged or deformed, and to ensure that large or viscous articles will be fed into the weighing hoppers in more reliable fashion, it is possible to provide a supply table immediately above the weighing hoppers and introduce the articles into the weighing hoppers of the weighing machines directly from the table by a manual operation. Then, after a combinatorial weighing cycle is performed, the articles are discharged automatically into a collecting conveyor from the selected weighing hoppers. Such an arrangement may be called a semi-automatic combinatorial weighing apparatus.

The supply table may be mounted on a frame so as to overlay the plurality of weighing hoppers, which are provided on a machine frame, the table lying parallel to the weighing hoppers and extending to the outer side of each hopper. To load articles from the supply table into the inner reaches of the weighing hoppers, an operator can stand on a pedestal provided on the outside of the frame. Consequently, in order to detect, on the basis of a appropriate signal, the weighing hoppers that have been emptied by discharging their articles in a combinatorial weighing cycle, the operator, standing on the pedestal, must lean forward from above the supply table and confirm whether there are articles in the weighing hoppers located below the supply table. This can be a rather tiresome task. The ensuing task of loading articles into the emptied weighing hoppers by hand can also be a difficult one for the operator. In performing this activity, moreover, the operator may inadvertently cause articles to fall from the supply table into weighing hoppers which, after having been selected as part of a combination to be discharged at the end of the weighing cycle concerned, have yet to discharge their articles. This can cause articles to be packaged in excess of the preset weight or number.

According to one aspect of the present invention, there is provided combinatorial weighing apparatus of the kind including a line of weighing hoppers, for holding individual quantities of articles to be weighed, carried by respective weighing machines for providing respective weight values for the individual quantities in the hoppers, and including selection means for employing the said weight values to compute different combinations of the said quantities and for selecting one of those combinations and bringing about discharge of the respective hoppers holding the selected quantities to a collection device thereby to form a desired output batch;

characterised by a line of manually loadable pool trays, for holding respective replenishment quantities for the hoppers, which trays are located respectively adjacent to upper inlet openings of the said weighing hoppers, each tray being tiltable individually to discharge its contents into the adjacent hopper and being viewable from outside the apparatus to facilitate prompt reloading of the tray when empty; the apparatus including selective discharging means connected with the said pool trays and operative automatically upon completion of the said discharge of the weighing hoppers of a selected combination to cause the pool trays adjacent respectively to those hoppers to be tilted so as to replenish those hoppers.

According to another aspect of the present invention there is provided a combinatorial weighing method, of the kind wherein articles to be weighed are supplied to a line of weighing hoppers, carried by respective weighing machines for providing respective weight values for the individual quantities in the hoppers, and wherein the said weight values are employed to compute different combinations of the said quantities and one of those combinations is selected and the respective hoppers holding the selected quantities are caused to discharge their contents to a collection device to form a desired output batch;

characterised in that a line of manually loaded pool trays is employed to hold respective replenishment quantities for the hoppers, the trays being located respectively adjacent to upper inlet openings of the said weighing hoppers and each tray being tiltable individually to discharge its contents into the adjacent hopper and being viewable from outside the apparatus and being reloaded manually when empty; and in that selective discharging means connected with the said pool trays operate automatically upon completion of the discharge of the selected weighing hoppers to cause the pool trays adjacent respectively to those hoppers to be tilted so as to replenish those hoppers.

Further reference will now be made to the accompanying drawings, in which:

Figure 1 shows a schematic side view of an automatic combinatorial weighing apparatus according to the prior art;

Figure 2 shows a diagrammatic side view of a combinatorial weighing apparatus which is operable in accordance with an embodiment of the present invention; and

Figure 3 shows a front view of the apparatus of Figure 2.

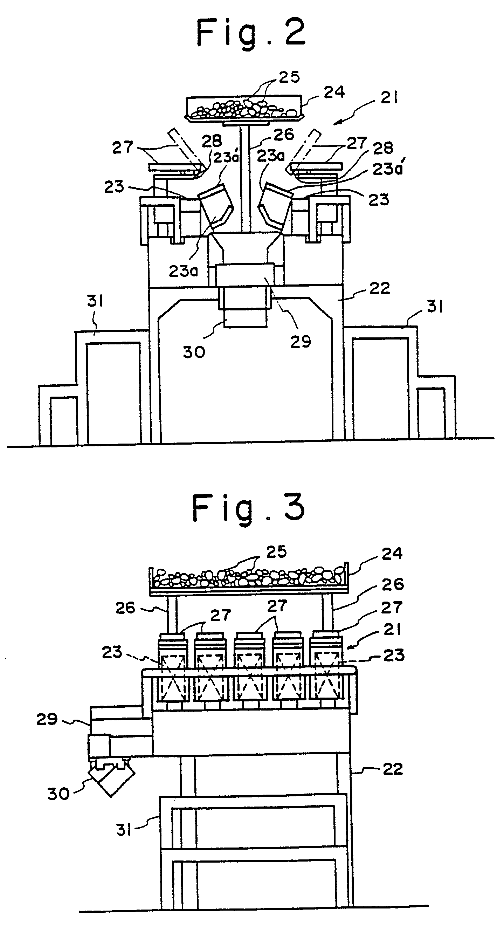

The combinatorial weighing apparatus indicated generally at 21 in Figures 2 and 3 is provided on the upper part of a frame 22. The apparatus in the illustrated embodiment includes ten weighing machines 23 arranged in two opposing rows of five weighing machines each, the weighing machines in opposing rows confronting one another. Each weighing machine 23 carries a weighing hopper 23a disposed substantially at the central portion of the frame 22. Numeral 24 denotes a supply table having a stock of articles 25. As illustrated in the drawings, the supply table 25 is supported above the center of the frame 22 by support columns 26 and is long enough to fully overlay the weighing machines in each of the two rows.

A manually loadable pool tray 27 is provided between the supply table 24 and each weighing hopper 23a, adjacent to the inlet opening 23a' of the hopper. Each pool tray has an inner edge region, nearest its adjacent hopper inlet opening 23a', located below an outer edge region of the supply table 24 and above the outer edge of the adjacent hopper opening 23a', each hopper 23a being inclined towards its adjacent tray 27.

Each pool tray 27 has its inward end pivotally attached to a shaft 28, about which the tray is capable of being tilted, from the horizontal attitude shown by solid lines to the inclined attitude indicated by broken lines, by drive means such as an air cylinder (not shown). Thus, each pool tray 27 may be tilted towards the article-receiving opening 23a' of the corresponding weighing hopper 23a.

A pedestal 31 is provided at the foot of the frame 22 and is high enough to permit an operator, who has mounted the pedestal, to view the surfaces of the pool trays 27 that are to receive the articles. The operator, standing on the pedestal 31, takes articles from the supply table 24 and places a suitable quantity of them manually on each of the pool trays 27, where the articles are temporarily retained. Then, when required, the trays 27 are tilted automatically to discharge their contents respectively into the underlying weighing hoppers 23a through the weighing hopper openings 23a'.

Each weighing machine 23 proceeds to weigh the articles received in its hopper 23a from the corresponding pool tray, whereby a plurality of weight values are obtained. Then, by means of a computation control unit, not shown, these weight values are combined into a multiplicity of different combinations, or each weight value is converted into the number of articles giving said weight value and the numbers are combined into a multiplicity of combinations, the weight values or numbers in each combination are added to obtain the corresponding sum, a combination giving a sum equal to closest to a preset weight or preset number is selected, and the weighing hoppers 23a of the weighing machines 23 corresponding to the selected combination are opened to discharge their articles to a collecting conveyor 29 provided below the weighing hoppers 23a of the two rows of weighing machines 23.

The end of the conveyor 29 towards which the articles are carried projects outwardly of the frame and terminates above the opening of a timing hopper 30. Articles 25 discharged from the weighing hoppers 23a to provide a desired output batch, of substantially the preset weight or preset number, fall onto the collecting conveyor 29 and are conveyed to the timing hopper 30 into which the articles fall from the conveyor 29. The article batch collected in the timing hopper 30 is discharged from that hopper at a suitable time in order to be packaged immediately or transferred to another conveyor for carrying the batch to a receptacle or packaging machine.

In each cycle, when the selected weighing hoppers 23a have discharged their articles a command signal is produced from the purpose of discharging the articles from the individual pool trays 27 corresponding respectively to these emptied weighing hoppers. In response to the discharge command signal, the drive means cause just these particular pool trays 27 to tilt and dump their articles into the respective adjacent empty weighing hoppers 23a. Before this is carried out, however, the operator, standing on the pedestal 31, is capable of confirming visually whether each of the pool trays 27 contains a quantity of the articles 25, and of reloading any empty tray with articles taken from the table 24. The visual checking operation can be performed quite easily. It is not necessary to provide any lamps or the like for indicating when weighing hopper are empty; confirming that all of the trays are holding articles is sufficient to ensure that the emptied weighing hoppers will be replenished.

Articles held by particular pool trays 27 will participate in the next combinatorial weighing cycle only if the corresponding weighing hoppers 23a belong to the combination selected in the current cycle. In comparison with the manual method of loading articles directly into the weighing hoppers, the present method of manually reloading the pool trays generally takes place at longer intervals. There is usually enough time to perform the loading operation even while combinatorial weighing is in progress. In addition, the rate at which empty weighing hoppers participate in combinations tends to be significantly reduced, so combinatorial weighing can take place with greater accuracy and a high processing capacity can be maintained. Further, if articles are introduced directly into the weighing hoppers, the operator may touch an adjoining weighing machine accidentally, thereby causing a weighing error or a shift in the zero point. The present method virtually eliminates this danger.

While the illustrated embodiment has the weighing machines arranged in two opposing rows, similar advantages can be obtained even with a single line of weighing machines.

In the illustrated embodiment of the present invention, in contrast to the apparatus of Figure 1, a long supply path is unnecessary so that delivery of the articles to the weighing hoppers may take place relatively reliably and with less danger of mishap, even if the articles are fragile and readily deformable, highly viscous or large in size.

Provided that the pool trays 27 of the illustrated embodiment are located at a height where the articles retained by them are in full view, the operator need not perform the troublesome task of leaning over, to confirm whether articles are within any individual weighing hoppers, as was necessary in the previously contemplated manual loading method.

As many apparently widely different embodiments of the present invention can be made without departing from the spirit and scope thereof, it is to be understood that the invention is not limited to the specific illustrated embodiment thereof except as required by the appended claims.

## Claims

1. Combinatorial weighing apparatus of the kind including a line of weighing hoppers (23a), for holding individual quantities of articles to be weighed, carried by respective weighing machines (23) for providing respective weight values for the individual quantities in the hoppers, and including selection means for employing the said weight values to compute different combinations of the said quantities and for selecting one of those combinations and bringing about discharge of the respective hoppers holding the selected quantities to a collection device (29) thereby to form a desired output batch;

characterised by a line of manually loadable pool trays (27), for holding respective replenishment quantities for the hoppers, which trays are located respectively adjacent to upper inlet openings (23a') of the said weighing hoppers, each tray being tiltable individually to discharge its contents into the adjacent hopper and being viewable from outside the apparatus to facilitate prompt reloading of the tray when empty; the apparatus including selective discharging means connected with the said pool trays (27) and operative automatically upon completion of the said discharge of the weighing hoppers (23a) of a selected combination to cause the pool trays adjacent respectively to those hoppers to be tilted so as to replenish those hoppers.

2. Apparatus as claimed in claim 1, wherein the said weighing hoppers are arranged in a row extending alongside a second such row of weighing hoppers (23a), there being a second line of such pool trays (27) which are located respectively adjacent to upper inlet openings (23a') of the weighing hoppers of the second row.

3. Apparatus as claimed in claim 1, further including a supply table (24) for holding a stock of articles available for loading onto the said pool trays, which table extends above the said weighing hoppers along the entire length of the said line.

4. Apparatus as claimed in claim 2, further including a supply table (24) for holding a stock of articles available for loading onto the said weighing hoppers of the two rows, along the entire length of each row.

5. Apparatus as claimed in claim 1, further including a supply table (24), for holding a stock of articles available for loading onto the said pool trays, extending along the line of pool trays and having an edge region extending above that edge of each pool tray which is nearest to its adjacent weighing hopper.

6. Apparatus as claimed in claims 2 and 5, wherein the said supply table (24) has an opposite edge region which extends above those respective edges of the pool trays of the second line that are nearest to their respective weighing hoppers.

7. A combinatorial weighing method, of the kind wherein articles to be weighed are supplied to a line of weighing hoppers (23a), carried by respective weighing machines (23) for providing respective weight values for the individual quantities in the hoppers, and wherein the said weight values are employed to compute different combinations of the said quantities and one of those combinations is selected and the respective hoppers (23a) holding the selected quantities are caused to discharge their contents to a collection device (29) to form a desired output batch;

characterised in that a line of manually loaded pool trays (27) is employed to hold respective replenishment quantities for the hoppers, the trays being located respectively adjacent to upper inlet openings (23a') of the said weighing hoppers and each tray being tiltable individually to discharge its contents into the adjacent hopper (23a) and being viewable from outside the apparatus and being reloaded manually when empty; and in that selective discharging means connected with the said pool trays (27) operate automatically upon completion of the discharge of the selected weighing hoppers to cause the pool trays adjacent respectively to those hoppers to be tilted so as to replenish those hoppers.

8. A method as claimed in claim 7, using apparatus as claimed in any one of claims 2 to 6.

**Patentansprüche**

1. Kombinatorische Wägevorrichtung mit einer Reihe von Wägebehältern (23a) zum Halten individueller Mengen zu wägender Artikel, welche von jeweiligen Wägemaschinen (23) getragen sind, die jeweilige Gewichtswerte für die individuellen Mengen in den Wägebehältern liefern, und mit Auswählmitteln zur Verwendung der Gewichtswerte zum Berechnen verschiedener Kombinationen der Mengen und zum Auswählen einer dieser Kombinationen und zum Bewirken der Ausgabe der jeweiligen die ausgewählten Mengen enthaltenden Behälter an eine Sammelvorrichtung (29), um so eine gewünschte Ausgabecharge zu bilden;

gekennzeichnet durch

eine Reihe manuell beladbarer Muldenschalen (27) zum Halten jeweiliger Füllmengen für die Behälter, wobei die Schalen jeweils neben oberen Einlaßöffnungen (23a') der Wägebehälter angeordnet sind, wobei jede Schale zum Ausgeben ihres Inhaltes in den benachbarten Behälter individuell kippbar und von außerhalb der Vorrichtung zum Erleichtern der sofortigen Wieder-Beladung der Schale sichtbar ist, wenn diese leer ist; wobei die Vorrichtung selektive Ausgabemittel umfaßt, die mit den Muldenschalen (27) verbunden sind und bei Beendigung der Ausgabe der Wägebehälter (23a) einer gewählten Kombination derart automatisch betreibbar sind, daß sie das Kippen der jeweils den Behältern benachbarten Muldenschalen veranlassen, um diese Behälter zu füllen.

2. Vorrichtung nach Anspruch 1, bei der die Wägebehälter in einer Reihe angeordnet sind, die sich entlang einer zweiten solchen Reihe von Wägebehältern (23a) erstreckt, wobei eine zweite Reihe solcher Muldenschalen (27) vorgesehen ist, die jeweils neben oberen Einlaßöffnungen (23a') der Wägebehälter der zweiten Reihe angeordnet sind.

3. Vorrichtung nach Anspruch 1, ferner mit einem Beschickungstisch (24) zum Halten einer Artikelmenge, die zum Laden auf die Muldenschalen verfügbar ist, wobei sich der Tisch oberhalb der Wägebehälter entlang der gesamten Länge der Reihe erstreckt.

4. Vorrichtung nach Anspruch 2, ferner mit einem Beschickungstisch (24) zum Halten einer Artikelmenge, die zum Laden auf die Muldenschalen verfügbar ist, wobei sich der Tisch oberhalb der Wägebehälter der zwei Reihen entlang der gesamten Länge jeder Reihe erstreckt.

5. Vorrichtung nach Anspruch 1, ferner mit einem Beschickungstisch (24) zum Halten einer Artikelmenge, die zum Laden auf die Muldenschalen verfügbar ist, wobei sich der Tisch entlang der Reihe von Muldenbehältern erstreckt und einen Randbereich aufweist, der sich oberhalb desjenigen Randes jeder Muldenschale erstreckt, der seinem benachbarten Wägebehälter am nächsten ist.

6. Vorrichtung nach den Ansprüchen 2 und 5, bei der der Beschickungstisch (24) einen gegenüberliegenden Randbereich aufweist, der sich oberhalb desjenigen jeweiligen Ränder der Muldenschalen der zweiten Reihe erstreckt, die ihren jeweiligen Wägebehältern am nächsten sind.

7. Kombinatorisches Wägeverfahren, bei dem zu wägende Artikel einer Reihe von Wägebehältern (23a) zugeführt werden, die zum Liefern jeweiliger Gewichtswerte für die individuellen Mengen in den Behältern von jeweiligen Wägemaschinen (23) getragen werden, und bei dem die Gewichtswerte zum Berechnen verschiedener Kombinationen der Mengen verwendet werden und eine dieser Kombinationen ausgewählt wird und die jeweiligen Behälter (23a), welche die ausgewählten Mengen enthalten, zur Ausgabe ihrer Inhalte an eine Sammelvorrichtung (29) veranlaßt werden, um eine gewünschte Ausgabecharge zu bilden;

dadurch gekennzeichnet, daß

eine Reihe manuell beladener Muldenschalen (27) zum Halten jeweiliger Füllmengen für die Behälter verwendet wird, wobei die Schalen jeweils neben oberen Einlaßöffnungen (23a') der Wägebehälter angeordnet sind, wobei jede Schale zum Ausgeben ihres Inhaltes in den benachbarten Behälter individuell kippbar und von außerhalb der Vorrichtung sichtbar ist und manuell beladen wird, wenn diese leer ist; und daß selektive Ausgabemittel vorgesehen sind, die mit den Muldenschalen (27) verbunden sind und bei Beendigung der Ausgabe der Wägebehälter (23a) einer gewählten Kombination derart automatisch betreibbar sind, daß sie das Kippen der jeweils den Behältern benachbarten Schalen veranlassen, um diese Behälter zu füllen.

8. Verfahren nach Anspruch 7 unter Verwendung einer Vorrichtung nach einem der Ansprüche 2-6.

**Revendications**

1. Appareil de pesage combinatoire du genre comprenant une rangée de trémies de pesage (23a) destinées à retenir des quantités individuelles d'articles qui doivent être pesés, portées par des machines de pesage (23) respectives en vue de fournir des valeurs de poids respectives concernant les quantites individuelles présentes dans les trémies, et comprenant un moyen de sélections destiné à utiliser lesdites valeurs de poids pour calculer différentes combinaisons desdites quantités et pour sélectionner l'une de ces combinaisons ainsi que pour mettre en position de décharge les trémies respectives qui retiennent les quantités sélectionnées jusqu'à un dispositif collecteur (29) pour former de ce fait un lot de sortie désiré;

caractérisé par une rangée de plateaux (27) d'accumulation pouvant être chargés manuellement, servant à retenir les quantités de remplissage respectives destinées aux trémies, lesquels plateaux sont situés respectivement à proximité des orifices d'entrée supérieurs (23a') desdites trémies de pesage, chaque plateau pouvant être basculé individuellement en vue de décharger son contenu dans la trémie voisine et pouvant être observé de l'extérieur de l'appareil pour faciliter un prompt rechargement du plateau lorsqu'il est vide; l'appareil comprenant des moyens de déchargement sélectif reliés auxdits plateaux d'accumulation (27) et fonctionnant automatiquement lors de l'achèvement du déchargement des trémies de pesage (23a) formant une combinaison sélectionnée, en vue de provoquer le basculement des plateaux respectivement voisins de ces trémies, de manière à remplir à nouveau ces trémies.

2. Appareil selon la revendication 1, dans lequel lesdites trémies de pesage sont disposées sur une rangée qui s'étend sur le côté et le long d'une seconde telle rangée de trémies de pesage (23a), une seconde rangée de tels plateaux d'accumulation (27) qui sont situés respectivement à proximité des orifices d'entrée supérieurs (23a') des trémies de pesage de la seconde rangée, étant en place.

3. Appareil selon la revendication 1, comprenant en outre une table d'alimentation (24) destinée à retenir un stock d'articles disponibles pour être chargés sur lesdits plateaux d'accumulation, laquelle table s'étend au-dessus desdites trémies de pesage sur l'ensemble de la longueur de ladite rangée.

4. Appareil selon la revendication 2, comprenant en outre une table d'alimentation (24) destinée à retenir un stock d'articles disponibles pour être chargès sur lesdits plateaux d'accumulation, laquelle table s'étend au-dessus desdites trémies de pesage des deux rangées sur toute la longueur de chaque rangée.

5. Appareil selon la revendication 1, comprenant en outre une table d'alimentation (24) destinée à retenir un stock d'articles disponibles pour être chargés sur lesdits plateaux d'accumulation, s'étendant le long de la rangée de plateaux d'accumulation et comportant une zone de bord s'étendant au-dessus du bord de chaque plateau d'accumulation qui est situé le plus près de sa trémie de pesage voisine.

6. Appareil selon les revendications 2 et 5, dans lequel ladite table d'alimentation (24) comporte une zone de bord opposé, qui s'étend au-dessus des bords respectifs des plateaux d'accumulation de la seconde rangée qui sont situés le plus près de leurs trémies de pesage respectives.

7. Procédé de pesage combinatoire, du genre dans lequel les articles qui doivent être pesés sont délivrés dans une rangée de trémies de pesage (23a) portées par des machines de pesage correspondantes (23) en vue de fournir des valeurs de poids respectives pour les quantités individuelles présentes dans les trémies, et dans lequel lesdites valeurs de poids sont employées pour calculer différentes combinaisons desdites quantités, une de ces combinaisons étant choisie et les trémies (23a) respectives contenant les quantités choisies sont actionnées en vue du déchargement de leur contenu dans un dispositif collecteur (29) de façon à créer un lot souhaité;

caractérisé en ce qu'une rangée de plateaux (27) d'accumulation chargés manuellement est utilisée pour retenir les quantités respectives destinées au remplissage des trémies, les plateaux étant situés respectivement à proximité des orifices (23a') d'entrée supérieurs desdites trémies de pesage et chaque plateau étant susceptible d'être basculé individuellement en vue de décharger son contenu dans la trémie voisine (23a) et pouvant être observé de l'extérieur de l'appareil et étant rechargé manuellement lorsqu'il est vide; et en ce que des moyens de déchargement sélectifs reliés auxdits plateaux d'accumulation (27) opèrent automatiquement, lors de l'achèvement du déchargement des trémies de pesage choisies, pour provoquer le basculement des plateaux respectivement voisins des trémies, de façon à remplir à nouveau ces trémies.

8. Procédé selon la revendication 7, utilisant un appareil selon l'une quelconque des revendications 2 à 6.

Fig. 1

EP 0 105 756 B1

1

# Fig. 2

# Fig. 3